# EUROPEAN PATENT APPLICATION

(11) **EP 4 746 486 A1**
(43) Date of publication of application: **20.05.2026**
(21) Application number: 24850859.0
(22) Date of filing: 30.07.2024
(51) Int. Cl.: H04W 16/28, H04W 72/40

(54) **COMMUNICATION METHOD AND COMMUNICATION DEVICE**

(30) Priority: 10.08.2023 CN 202311008362
(71) Applicant: Huawei Technologies Co., Ltd., Shenzhen, Guangdong 518129 (CN)
(72) Inventor: ZHANG, Yi, Shenzhen, Guangdong 518129 (CN); QI, Hong, Shenzhen, Guangdong 518129 (CN); XU, Jiaojiao, Shenzhen, Guangdong 518129 (CN); SU, Hongjia, Shenzhen, Guangdong 518129 (CN)
(74) Representative: Pfenning, Meinig & Partner mbB
(86) International application number: PCT/CN2024/108459
(87) International publication number: WO 2025/031211

(57) **Abstract**

This application provides a communication method and a communication apparatus, and is applicable to the fields of V2X, internet of vehicles, intelligent driving, and assisted driving. The method includes: A first terminal apparatus determines a first resource based on an identifier of the first terminal apparatus, where a frequency domain resource of the first resource is used to determine the identifier of the first terminal apparatus, the first resource belongs to a first resource set corresponding to a first symbol, and a plurality of resources in the first resource set are respectively used to determine identifiers of different terminal apparatuses. Further, the first terminal apparatus sends a first signal on the first resource through a first transmission beam. According to the method, when sending a signal through a transmission beam, a transmit end apparatus (namely, the first terminal apparatus) may indicate a transmit end apparatus of the signal may be indicated through a sending resource (namely, the first resource) of the signal. This helps improve accuracy of a transmission beam determined in a side link communication scenario, thereby helping improve high-frequency communication quality of a sidelink.

## Description

This application claims priority to Chinese Patent Application No. 202311008362.0, filed with the China National Intellectual Property Administration on August 10, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

In communication application, a frequency range from 410 MHz to 7125 MHz is usually referred to as a frequency range 1 (frequency range 1, FR1), and a frequency range from 24250 MHz to 52600 MHz is usually referred to as FR2. In an FR1 communication scenario, a communication signal is usually sent in an omnidirectional transmission manner, which has characteristics of a long coverage distance, a strong diffraction capability, and a good coverage effect. In an FR2 communication scenario, a communication signal is usually sent in a manner of aggregating transmitted energy to one direction by using a method such as beamforming, which has characteristics such as a small beam coverage area, ultra-large bandwidth, and low interference.

In a sidelink (sidelink, SL) communication scenario, one terminal may receive signals sent by a plurality of terminals. Therefore, after a high-frequency signal (that is, a signal in FR2 communication) is introduced into the SL communication scenario for communication, how to determine a transmission beam between a transmit end device and a receive end device is an urgent problem to be resolved.

### SUMMARY

Embodiments of this application provide a communication method and a communication apparatus, to help improve accuracy of a transmission beam determined in an SL communication scenario in a beam management process, thereby helping improve high-frequency communication quality of an SL.

According to a first aspect, this application provides a communication method. An example in which a first terminal apparatus performs the method is used. The method includes: The first terminal apparatus determines a first resource based on an identifier of the first terminal apparatus, where a frequency domain resource of the first resource is used to determine the identifier of the first terminal apparatus, the first resource belongs to a first resource set corresponding to a first symbol, and a plurality of resources in the first resource set are respectively used to determine identifiers of different terminal apparatuses; and further, the first terminal apparatus sends a first signal on the first resource through a first transmission beam.

In the method described in the first aspect, when sending a signal through a transmission beam, a transmit end apparatus (namely, the first terminal apparatus) may indicate an identifier of the transmit end apparatus of the signal on a frequency domain resource of a sending resource (namely, the first resource) of the signal, in other words, the identifier of the transmit end apparatus is carried on the frequency domain resource of the first resource. In an SL communication scenario, when a plurality of transmit end apparatuses (including the first terminal apparatus mentioned in this application) send signals through different transmission beams, according to the communication method, the transmit end apparatuses corresponding to the transmission beams may be distinguished from each other based on resources on which the signals are sent through the transmission beams. This helps improve accuracy of a determined transmission beam in a beam management process in the SL communication scenario, thereby helping improve high-frequency communication quality of an SL.

In a possible implementation, the first terminal apparatus receives, on a second resource, response information for the first signal from a second terminal apparatus, where a second symbol on the second resource is a symbol corresponding to the first symbol on the first resource, and a frequency domain resource of the second resource is determined based on the identifier of the first terminal apparatus. Further, the first terminal apparatus determines the first transmission beam as a target transmission beam based on the response information.

According to a second aspect, this application provides a communication method. An example in which a second terminal apparatus performs the method is used. The method includes: The second terminal apparatus receives a first signal from a first terminal apparatus on a first resource, where a frequency domain resource of the first resource is used to determine an identifier of the first terminal apparatus, the first resource belongs to a first resource set corresponding to a first symbol, and a plurality of resources in the first resource set are respectively used to determine identifiers of different terminal apparatuses.

In the method described in the second aspect, in an SL communication scenario, when a plurality of transmit end apparatuses (including the first terminal apparatus mentioned in this application) send signals through different transmission beams, a receive end apparatus (namely, the second terminal apparatus mentioned in this application) may distinguish, based on frequency domain resources of resources on which the signals are sent through the transmission beams, between the transmit end apparatuses corresponding to the transmission beams. This helps improve accuracy of a determined transmission beam in a beam management process in the SL communication scenario, thereby helping improve high-frequency communication quality of an SL.

In a possible implementation, the second terminal apparatus determines a second resource, where a second symbol on the second resource is a symbol corresponding to the first symbol on the first resource, and a frequency domain resource of the second resource is determined based on the identifier of the first terminal apparatus. Further, the second terminal apparatus sends, to the first terminal apparatus on the second resource, response information for the first signal. By implementing this possible implementation, the identifier of the first terminal apparatus may be indicated based on the frequency domain resource of the second resource, which helps the first terminal apparatus accurately determine, from a plurality of pieces of response information, response information that needs to be received by the first terminal apparatus.

With reference to the methods described in the first aspect and the second aspect, in a possible implementation, a plurality of transmission beams of the first terminal apparatus correspond to a plurality of symbols in a first time domain unit, the plurality of transmission beams include the first transmission beam, and the plurality of symbols include the first symbol.

With reference to the methods described in the first aspect and the second aspect, in a possible implementation, the second resource belongs to a second resource set corresponding to the second symbol, and frequency domain resources of resources in the second resource set are determined based on identifiers of different terminal apparatuses. By implementing this possible implementation, resources on one symbol may be used by different terminal apparatuses, thereby helping improve resource utilization.

With reference to the methods described in the first aspect and the second aspect, in a possible implementation, the second symbol belongs to a second time domain unit, and symbols in the second time domain unit are in one-to-one correspondence with the symbols in the first time domain unit.

With reference to the methods described in the first aspect and the second aspect, in a possible implementation, a frequency domain position of the frequency domain resource of the first resource in a frequency domain resource set of the first symbol is used to determine the identifier of the first terminal apparatus. By implementing this possible implementation, when the first resource does not need to carry any information, the identifier of the first terminal apparatus may be determined based on the position of the frequency domain resource of the first resource, thereby helping save communication resources.

With reference to the methods described in the first aspect and the second aspect, in a possible implementation, the frequency domain resource of the first resource is a first resource block RB or a first resource element RE.

With reference to the methods described in the first aspect and the second aspect, in a possible implementation, the frequency domain resource of the first resource is a first RB, and a second RE in the first RB is used to determine a beam index of the first transmission beam. By implementing this possible implementation, when the first resource does not need to carry any information, the identifier of the first terminal apparatus and the beam index of the first transmission beam can be determined based on the frequency domain resource of the first resource, thereby helping save communication resources.

With reference to the methods described in the first aspect and the second aspect, in a possible implementation, a frequency domain position of the second RE in the first RB is used to determine the beam index of the first transmission beam.

With reference to the methods described in the first aspect and the second aspect, in a possible implementation, the first signal is a reference signal or a reference sequence.

With reference to the methods described in the first aspect and the second aspect, in a possible implementation, the first signal is a reference sequence, and the frequency domain resource of the first resource and a code domain resource of the first resource are used to determine the identifier of the first terminal apparatus. By implementing this possible implementation, the identifier of the terminal apparatus may be determined based on the frequency domain resource and the code domain resource, so that resources on one symbol can be used by more terminal apparatuses, thereby helping improve resource utilization.

With reference to the methods described in the first aspect and the second aspect, in a possible implementation, a code domain resource of the first resource is used to determine a beam index of the first transmission beam.

With reference to the methods described in the first aspect and the second aspect, in a possible implementation, the second resource set corresponding to the second symbol further includes a third resource, a frequency domain resource of the third resource is different from the frequency domain resource of the second resource, the third resource is used by a third terminal apparatus to send a second signal, the second signal is different from the first signal, and the frequency domain resource of the third resource is used to determine an identifier of the third terminal apparatus. By implementing this possible implementation, a resource set corresponding to a same symbol may be used to send a beam sweeping signal (that is, send a signal used for beam management, for example, the first signal or the second signal in this application), or may be used to send response information, thereby helping improve flexibility of resource scheduling.

According to a third aspect, this application provides a communication apparatus. The communication apparatus may be a first terminal apparatus, or may be an apparatus in a first terminal apparatus, or an apparatus that can be used in a matching manner with a first terminal apparatus. The communication apparatus may alternatively be a chip system. The communication apparatus may perform the method described in the first aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effects, refer to the method and the beneficial effects in the first aspect.

According to a fourth aspect, this application provides a communication apparatus. The communication apparatus may be a second terminal apparatus, or may be an apparatus in a second terminal apparatus, or an apparatus that can be used in a matching manner with a second terminal apparatus. The communication apparatus may alternatively be a chip system. The communication apparatus may perform the method described in the second aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effects, refer to the method and the beneficial effects in the second aspect.

According to a fifth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method described in the first aspect through a logic circuit or by executing code instructions, or the processor is configured to implement the method described in the second aspect through a logic circuit or by executing code instructions.

According to a sixth aspect, this application provides a computer-readable storage medium. The storage medium stores a computer program or instructions, and when the computer program or the instructions are executed by a communication apparatus, the method described in the first aspect is implemented, or the method described in the second aspect is implemented.

According to a seventh aspect, this application provides a computer program product including instructions. When a communication apparatus reads and executes the instructions, the communication apparatus is enabled to perform the method described in the first aspect, or the communication apparatus is enabled to perform the method described in the second aspect.

According to an eighth aspect, this application provides a communication system, including a communication apparatus configured to perform the method described in the first aspect and a communication apparatus configured to perform the method described in the second aspect.

### BRIEF DESCRIPTION OF DRAWINGS

FIG. 1 is a diagram of a communication system according to an embodiment of this application;
FIG. 2 is a diagram of a slot structure of an SL according to an embodiment of this application;
FIG. 3 is a flowchart of a communication method according to an embodiment of this application;
FIG. 4a is a diagram of another slot structure of an SL according to an embodiment of this application;
FIG. 4b is a diagram of still another slot structure of an SL according to an embodiment of this application;
FIG. 5a is a diagram of a correspondence between symbols in a first time domain unit and transmission beams according to an embodiment of this application;
FIG. 5b is a diagram of another correspondence between symbols in a first time domain unit and transmission beams according to an embodiment of this application;
FIG. 5c is a diagram of still another correspondence between symbols in a first time domain unit and transmission beams according to an embodiment of this application;
FIG. 5d is a diagram of a frequency domain resource set corresponding to a first symbol according to an embodiment of this application;
FIG. 5e is another diagram of a frequency domain resource set corresponding to a first symbol according to an embodiment of this application;
FIG. 5f is still another diagram of a frequency domain resource set corresponding to a first symbol according to an embodiment of this application;
FIG. 5g is a diagram of a frequency domain resource set and a code domain resource set that correspond to a first symbol according to an embodiment of this application;
FIG. 6a is a diagram of a correspondence between a first time domain unit and a second time domain unit according to an embodiment of this application;
FIG. 6b is a diagram of a correspondence between a first resource and a second resource according to an embodiment of this application;
FIG. 6c is a diagram of another correspondence between a first resource and a second resource according to an embodiment of this application;
FIG. 6d is a diagram of a correspondence between a second resource and a third resource according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification mean that specific features, structures, or characteristics described in combination with embodiments may be included in at least one embodiment of this application. The phrase shown in various positions in the specification may not necessarily refer to a same embodiment, and is not an independent or optional embodiment exclusive from another embodiment. It should be understood that embodiments described in this specification may be combined with another embodiment.

To facilitate specific understanding of embodiments of this application, the following first describes a system architecture in embodiments of this application.

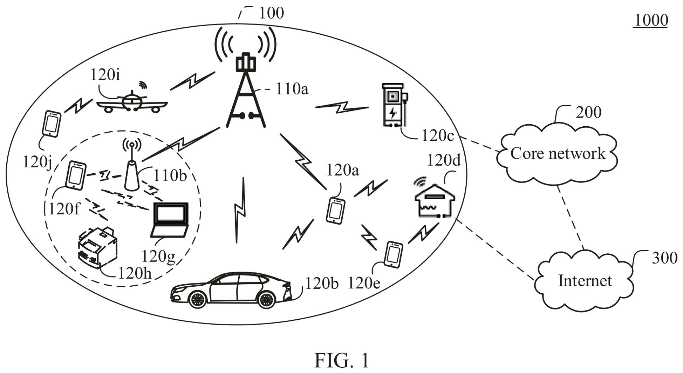

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, which are collectively referred to as 110), and may further include at least one terminal apparatus (for example, 120a to 120j in FIG. 1, which are collectively referred to as 120). The RAN 100 may alternatively include another RAN node, for example, a wireless relay device and/or a wireless backhaul device (not shown in FIG. 1). The terminal apparatus 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminal apparatuses may be connected to each other in a wired or wireless manner and the RAN nodes may be connected to each other in a wired or wireless manner. It should be noted that the RAN node 110 may also be referred to as a network device in the following.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may alternatively include the foregoing two or more different radio access systems. The RAN 100 may alternatively be an open RAN (open RAN, O-RAN).

The RAN node, also referred to as a radio access network device, a RAN entity, or an access node, is configured to help a terminal apparatus access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal apparatus implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes: CU-control plane and CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses a base station as an example of the RAN node for description.

The terminal apparatus is a device having a wireless transceiver function, and may send a signal to the base station, or receive a signal from the base station. The terminal apparatus may also be referred to as a terminal device, user equipment (user equipment, UE), a mobile station, a mobile terminal, or the like. The terminal apparatus may be widely used in various scenarios such as device-to-device (device-to-device, D2D), vehicle to everything (vehicle to everything, V2X) communication, machine type communication (machine type communication, MTC), internet of things (internet of things, IoT), virtual reality, augmented reality, industrial control, autonomous driving, telemedicine, smart grid, smart furniture, smart office, smart wearable, smart transportation, and smart city. The terminal apparatus may be a mobile phone, a tablet computer, a computer with a wireless transceiver function, a wearable device, a vehicle, an airplane, a ship, a robot, a robotic arm, a smart home device, or the like. Alternatively, the terminal apparatus may be a vehicle apparatus, for example, an entire vehicle apparatus, an in-vehicle module, an in-vehicle chip, an on board unit (on board unit, OBU), or a telematics box (telematics box, T-BOX). The terminal apparatus may alternatively be a road side unit (road side unit, RSU), a chip, or the like. A specific technology and a specific device form that are used by the terminal apparatus are not limited in embodiments of this application.

The base station and the terminal apparatus may be fixed or movable. The base station and the terminal apparatus may be deployed on land, including indoors or outdoors, hand-held or vehicle-mounted; may be deployed on water; or may be deployed on an airplane, a balloon, or an artificial satellite. Application scenarios of the base station and the terminal apparatus are not limited in embodiments of this application.

Roles of the base station and the terminal apparatus may be relative. For example, a helicopter 120i or an unmanned aerial vehicle 120i in FIG. 1 may be configured as a mobile base station. For the terminal apparatus 120j accessing the radio access network 100 via 120i, the terminal apparatus 120i is a base station. However, for the base station 110a, 120i is a terminal apparatus. In other words, communication between 110a and 120i is performed by using a radio air interface protocol. Certainly, communication between 110a and 120i may alternatively be performed by using an interface protocol between base stations. In this case, for 110a, 120i is also a base station. Therefore, both the base station and the terminal apparatus may be collectively referred to as a communication apparatus, 110a and 110b in FIG. 1 may be referred to as communication apparatuses having a function of the base station, and 120a to 120j in FIG. 1 may be referred to as communication apparatuses having a function of the terminal apparatus.

Communication between the base station and the terminal apparatus, between the base stations, or between the terminal apparatuses may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the base station may alternatively be executed by a module (for example, a chip) in the base station, or may be executed by a control subsystem including the function of the base station. The control subsystem including the function of the base station herein may be a control center in the foregoing application scenarios, such as smart grid, industrial control, smart transportation, and smart city. The function of the terminal apparatus may alternatively be executed by a module (for example, a chip or a modem) in the terminal apparatus, or may be executed by an apparatus including the function of the terminal apparatus.

For ease of understanding related content in embodiments of this application, the following further explains and describes some terms in embodiments of this application. This part is merely for ease of understanding, and cannot be considered as disclosure or specific limitation of the technical solutions of this application.

### 1. Sidelink (sidelink, SL)

When direct communication is performed between a terminal apparatus A and a terminal apparatus B through a PC5 interface, a link for direct communication between the terminal apparatus A and the terminal apparatus B may be understood as an SL. An application scenario of an SL communication technology includes but is not limited to a device to device (device to device, D2D) communication scenario, a vehicle-to-everything (vehicle-to-everything, V2X) communication scenario, or the like.

### 2. SL resource pool (resource pool)

A resource for performing SL communication between a terminal device A and a terminal device B is configured based on an SL resource pool. The SL resource pool may be a set of time domain resources and frequency domain resources for SL communication. In a possible implementation, the SL resource pool may further include a code domain resource. It should be noted that the time domain resource mentioned in this application may be represented by a frame (frame), a sub-frame (sub-frame), a slot (slot), a symbol (symbol), or the like. One frame may include a plurality of sub-frames, one sub-frame may include a plurality of slots, and one slot may include a plurality of symbols. For example, one slot may include 14 symbols. The frequency domain resource mentioned in this application may be represented by a sub-channel (sub-channel), a resource block group (resource block group, RBG), a physical resource block (physical resource block, PRB), a sub-carrier (sub-carrier, SC), or the like. One sub-channel may include a plurality of consecutive PRBs in frequency domain, and one PRB may include a plurality of sub-carriers, where the PRB may also be referred to as a resource block (resource block, RB). Generally, one sub-carrier on one symbol is also referred to as one resource element (resource element, RE). Different code domain resources mentioned in this application may be distinguished from each other by using a cyclic shift (cyclic shift, CS).

The SL resource pool is usually obtained based on SL resource pool configuration information and/or SL bandwidth part (bandwidth part, BWP) configuration information. Specifically, when the terminal apparatus is in a network coverage area, the terminal apparatus may obtain the SL resource pool configuration information and/or the SL bandwidth part (bandwidth part, BWP) configuration information by receiving a system information block (system information block, SIB), cell-specific (cell-specific) radio resource control (radio resource control, RRC) signaling, or terminal apparatus user-specific (UE-specific) RRC signaling from the network device. When the terminal apparatus is not in a network coverage area, the terminal apparatus may alternatively use preconfigured SL resource pool configuration information or preconfigured SL BWP configuration information. The SL resource pool configuration information includes resource pool resource information, and the resource pool resource information indicates the SL resource pool. The SL BWP configuration information may include SL resource pool information that is used to configure a quantity of resource pools included in a BWP. The SL BWP configuration information may include SL bandwidth information that indicates a size of a bandwidth for SL communication, for example, indicates that an SL bandwidth is 20 megahertz (MHz).

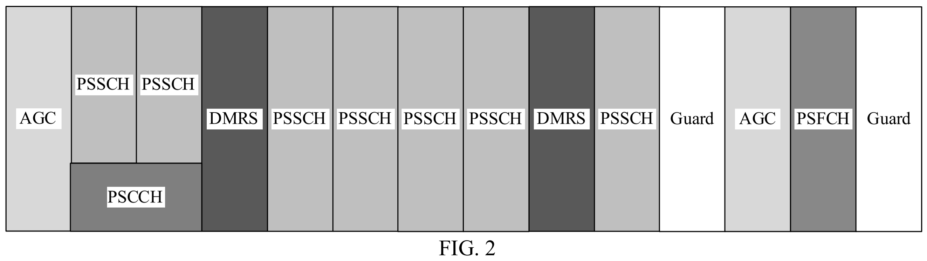

To facilitate understanding of the technical solutions of this application, this application further provides a diagram of a slot structure of an SL. As shown in FIG. 2, in SL communication, one slot (slot) may include 14 symbols (symbols), and the 14 symbols may be separately used for transmitting automatic gain control (automatic gain control, AGC), a physical sidelink shared channel (physical sidelink shared channel, PSSCH), a physical sidelink control channel (physical sidelink control channel, PSCCH), a demodulation reference signal (demodulation reference signal, DMRS), a physical sidelink feedback channel (physical sidelink feedback Channel, PSFCH), and the like. The PSCCH may exist on each sub-channel in each slot. For example, a time-domain starting position of one PSCCH is a 2^{nd} symbol used for SL transmission in each slot, and a length of the PSCCH is two or three symbols (determined based on the resource pool configuration information); and a starting position of a frequency-domain position of one PSCCH is the smallest PRB index (index) of each sub-channel, and a length of the PSCCH is at least 10 PRBs (determined based on the resource pool configuration information) but does not exceed a size of the sub-channel.

### 3. Beam

A beam (beam) and a beam pair (beam pair link, BPL) are introduced into a communication system. The beam is a communication resource. Beams may be classified into a transmit beam and a reception beam. A beam forming technology may be a beamforming technology or another technical means. The beamforming technology may be specifically a digital beamforming technology, an analog beamforming technology, a hybrid digital/analog beamforming technology, or the like. Beamforming includes transmit beamforming and reception beamforming.

Transmit beam: is a beam that has spatial directivity and that is formed by a signal sent by a transmit end device by using a specific beamforming weight. In an uplink direction, the transmit end device may be a terminal. In a downlink direction, the transmit end device may be a network device. In this application, the transmit beam may also be referred to as a transmission beam. Alternatively, the transmission beam may be understood as distribution of signal strength formed in different spatial directions after a signal is transmitted through an antenna.

Reception beam: is a beam that has spatial directivity and that is formed by a signal received by a receive end device by using a specific beamforming weight. In an uplink direction, the receive end device may be a network device. In a downlink direction, the receive end device may be a terminal. Alternatively, the reception beam may be understood as distribution, in different spatial directions, of signal strength of radio signals received from the antenna.

Transmit beamforming: When a transmit end device having an antenna array sends a signal, a specific amplitude and phase are set on each antenna element of the antenna array, so that the sent signal has specific spatial directivity, that is, the signal has a high signal power in some directions, and has a low signal power in some other directions. A direction with a highest signal power is a direction of a transmit beam. The antenna array includes a plurality of antenna elements. An additional specific amplitude and phase are a beamforming weight.

Reception beamforming: When a receive end device having an antenna array receives a signal, a specific amplitude and phase are set on each antenna element of the antenna array, so that a power gain of the received signal is directional, that is, the power gain is high when the signal is received in some directions, and the power gain is low when the signal is received in some other directions, and a direction with the highest power gain when the signal is received is a direction of a reception beam. The antenna array includes a plurality of antenna elements. An additional specific amplitude and phase are a beamforming weight.

Sending a signal by using (or through) a transmit beam means sending the signal by using a beamforming weight.

Receiving a signal by using a reception beam means receiving the signal by using a beamforming weight.

Different beams may be considered as different resources. Same information or different information may be sent by using (or through) different beams. The beam pair is established based on the concept of the beam. The beam pair usually includes one transmit beam of the transmit end device and one reception beam of the receive end device. It should be noted that, unless otherwise specified, a transmit beam in the following is a transmit beam of a network device, and a reception beam in the following is a reception beam of a terminal.

In a communication system such as a 5G new radio (new radio, NR) system, both the network device and the terminal may generate one or more transmit beams and one or more reception beams. Before data is transmitted, beam alignment needs to be performed.

The beam may be represented by a spatial filter (spatial filter) or spatial parameters (spatial parameters) in a protocol. A beam used for sending a signal may be referred to as a transmission beam (transmission beam, Tx beam), and may be referred to as a spatial transmit filter or a spatial transmit parameter. A beam used for receiving a signal may be referred to as a reception beam (reception beam, Rx beam), and may be referred to as a spatial receive filter or a spatial receive parameter.

It should be understood that the foregoing listed representation of the beam in the protocol is merely an example, and shall not constitute any limitation on this application. This application does not exclude a possibility that other terms are defined in another protocol to indicate same or similar meanings.

In addition, the beam may be a wide beam, a narrow beam, or a beam of another type. Same information or different information may be sent through different beams.

Optionally, a plurality of beams having same or similar communication features are considered as one beam. One beam may include one or more antenna ports, configured to transmit data, control signaling, a sounding signal, or the like. The one or more antenna ports forming one beam may also be considered as one antenna port set.

### 4. Beam management

When a radio signal (or referred to as a high-frequency radio signal) in FR2 is used for communication between a transmit end apparatus and a receive end apparatus, beam management may be performed between the transmit end apparatus and the receive end apparatus, to implement alignment between a transmission beam of the transmit end apparatus and a reception beam of the receive end apparatus (or understood as alignment between a direction of a transmission beam and a direction of a reception beam). It may be understood that when the transmission beam of the transmit end apparatus is aligned with the reception beam of the receive end apparatus, communication quality between the transmit end apparatus and the receive end apparatus may be good. Beam management may be understood as a process of determining (or adjusting) the transmission beam and determining (or adjusting) the reception beam.

Beam management may be divided into three operating states. Operations in the states are as follows:
P-1: The receive end apparatus measures a transmission beam set of the transmit end apparatus, and selects the transmission beam of the transmit end apparatus and the reception beam of the receive end apparatus.
P-2: Based on P-1, the receive end apparatus measures a smaller transmission beam set of the transmit end apparatus, to improve the transmission beam of the transmit end apparatus.
P-3: The receive end apparatus measures a transmission beam of a same transmit end apparatus by using different reception beams, to improve the reception beam of the receive end apparatus.

In an SL communication scenario, there is a case in which one receive end apparatus may receive signals of a plurality of transmit end apparatuses. In the SL communication scenario, if communication based on a radio signal of an FR2 frequency band (referred to as high-frequency communication hereinafter) is performed, and in a process of beam management performed by a receive end apparatus A and a transmit end apparatus B, if a transmission beam of the transmit end apparatus B cannot be distinguished from a transmission beam of another transmit end apparatus, beam management between the receive end apparatus A and the transmit end apparatus B may fail, causing a problem that communication cannot be performed between the receive end apparatus A and the transmit end apparatus B.

This application provides a communication method, to distinguish between transmission beams of transmit end apparatuses in the SL communication scenario, and improve accuracy of determining a target transmission beam in a beam management process. It should be noted that this application is described only by using an example in which the method provided in this application is applied to a beam management process (or understood as initial beam alignment), which should not be considered as a specific limitation on an application scenario of this application. The method provided in this application may be further applied to a beam maintenance scenario or a beam failure recovery scenario.

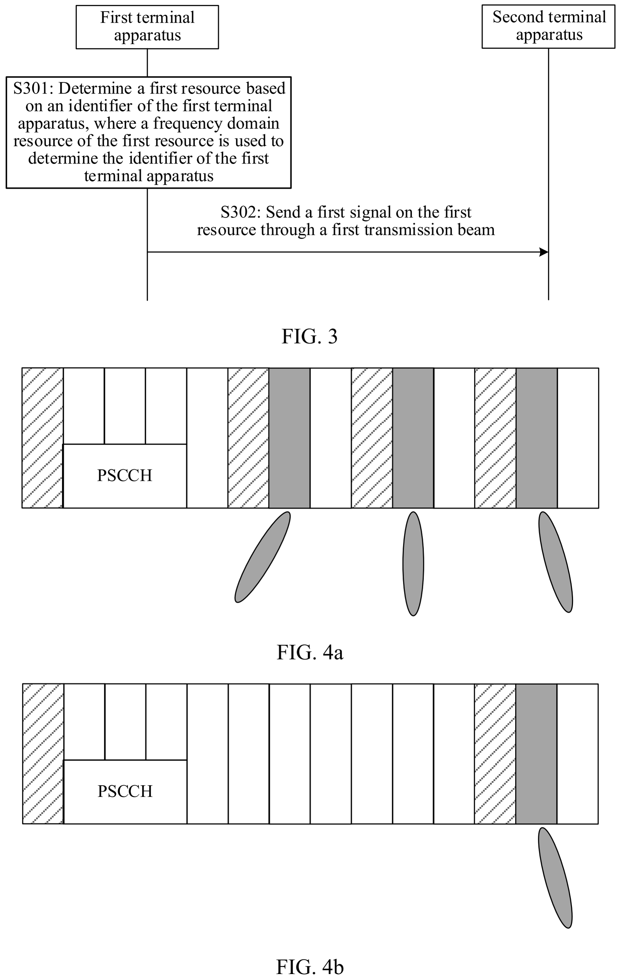

The following describes in detail a communication method and a communication apparatus provided in embodiments of this application with reference to the accompanying drawings. FIG. 3 is a flowchart of a communication method according to an embodiment of this application. As shown in FIG. 3, the communication method includes the following step S301 and step S302. An example in which the method shown in FIG. 3 is performed by a transmit end apparatus (that is, a first terminal apparatus mentioned in this application) and a receive end apparatus (that is, a second terminal apparatus mentioned in this application) is used for description.

S301: The first terminal apparatus determines a first resource based on an identifier of the first terminal apparatus, where a frequency domain resource of the first resource is used to determine the identifier of the first terminal apparatus, the first resource belongs to a first resource set corresponding to a first symbol, and a plurality of resources in the first resource set are respectively used to determine identifiers of different terminal apparatuses.

In other words, the first terminal apparatus determines, based on the identifier of the first terminal apparatus, the first resource from the first resource set corresponding to the first symbol. The first resource may be understood as a sending resource used by the first terminal apparatus to send a first signal on the first symbol. An identifier of a terminal apparatus (that is, the first terminal apparatus) that uses the first resource may be determined based on the frequency domain resource of the first resource.

It should be noted that, that the frequency domain resource of the first resource is used to determine the identifier of the first terminal apparatus may be understood as that it may be determined, based on the frequency domain resource of the first resource, that the first resource is used by the first terminal apparatus to perform beam management, or may be understood as that it may be determined, based on the frequency domain resource of the first resource, that the first resource is used by the first terminal apparatus to send a signal (that is, the first signal mentioned below) used for beam management, or may be understood as that the frequency domain resource of the first resource may be determined based on the identifier of the first terminal apparatus (that is, there is a mapping relationship between the identifier of the first terminal apparatus and the frequency domain resource of the first resource).

It should be further noted that an identifier of a terminal apparatus mentioned in this application includes but is not limited to any one of the following: a source identifier (source ID) of the terminal apparatus in SL communication, a destination identifier (destination ID) of the terminal apparatus in SL communication, a synchronization signal identifier (synchronization signal identifier, SSID) of the terminal apparatus in SL communication, an identifier obtained by truncating the source ID/destination ID/SSID, an identifier obtained by mapping based on the source ID/destination ID/SSID, an identifier obtained by performing a modulo operation on a value of a frequency domain resource based on the source ID/destination ID/SSID, or the like. A representation form of the identifier of the terminal apparatus is not specifically limited in this application.

It should be further noted that the resource (for example, the first resource, a second resource mentioned below, a resource in the first resource set, and a resource in a second resource set) used for beam management mentioned in this application may be a resource in the foregoing SL resource pool, or may not be a resource in the foregoing SL resource pool. It may be understood that when the resource used for beam management mentioned in this application is not the resource in the foregoing SL resource pool, the resource used for beam management may be a resource that is predefined in a communication protocol and that is used for a beam management process in the SL communication scenario, or a resource set that is preconfigured by the network device and that is dedicated to beam management. When the resource used for beam management mentioned in this application is the resource in the foregoing SL resource pool, a time domain resource of the resource used for beam management does not overlap a time domain resource corresponding to a PSCCH in the SL resource pool. In other words, in this case, a diagram of a slot structure of an SL may be shown in FIG. 4a. A symbol (or understood as a resource set corresponding to the symbol) used to carry the PSCCH is not used by the terminal apparatus (including the first terminal apparatus mentioned in this application) to perform beam management, and one or more of other symbols (that is, symbols other than the symbol used to carry the PSCCH) are used by the terminal apparatus to perform beam management. Alternatively, when the resource used for beam management mentioned in this application is the resource in the foregoing SL resource pool, as shown in FIG. 4b, a time domain resource of the resource used by the terminal apparatus to perform beam management may be one or more of the last three symbols in one slot, and the time domain resource of the resource used by the terminal apparatus to perform beam management may overlap or may not overlap with a time domain resource corresponding to a PSFCH in the SL resource pool. When the time domain resource of the resource used for beam management overlaps the time domain resource corresponding to the PSFCH in the SL resource pool, a frequency domain resource of the resource used for beam management is different from (or understood as orthogonal to) a frequency domain resource of the PSFCH.

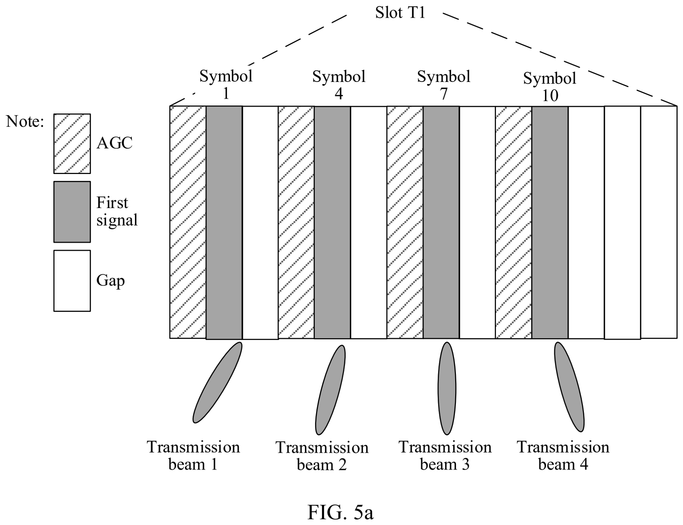

In a possible implementation, a plurality of transmission beams (including a first transmission beam mentioned in this application) of the first terminal apparatus correspond to a plurality of symbols (including the first symbol mentioned in this application) in a first time domain unit. It may be understood as that, in a process of performing beam management, the first terminal apparatus sends first signals to the second terminal apparatus on different symbols of the plurality of symbols in the first time domain unit through different transmission beams. For example, FIG. 5a is a diagram of a correspondence between symbols in a first time domain unit and transmission beams according to an embodiment of this application. In FIG. 5a, the first time domain unit is a slot T1, and the first terminal apparatus sends first signals to the receive end apparatus on a symbol 1, a symbol 4, a symbol 7, and a symbol 10 in the slot T1 through a transmission beam 1 to a transmission beam 4 respectively. In other words, the symbol 1 corresponds to the transmission beam 1 (that is, a first signal is sent on the symbol 1 through the transmission beam 1), the symbol 4 corresponds to the transmission beam 2 (that is, a first signal is sent on the symbol 4 through the transmission beam 2), the symbol 7 corresponds to the transmission beam 3 (that is, a first signal is sent on the symbol 7 through the transmission beam 3), and the symbol 10 corresponds to the transmission beam 4 (that is, a first signal is sent on the symbol 10 through the transmission beam 4).

It should be noted that in FIG. 5a, this application is described by using merely an example in which the first time domain unit is one slot. The first time domain unit may alternatively be a plurality of consecutive slots. It may be understood that when the first time domain unit is two consecutive slots, if every three symbols (that is, one AGC symbol, one symbol for a first signal, and one gap (gap) symbol) correspond to one transmission beam, the first time domain unit may correspond to nine transmission beams; or when the first time domain unit is three consecutive slots, if every three symbols (that is, one AGC symbol, one symbol for a first signal, and one gap (gap) symbol) correspond to one transmission beam, the first time domain unit may correspond to 14 transmission beams; and so on.

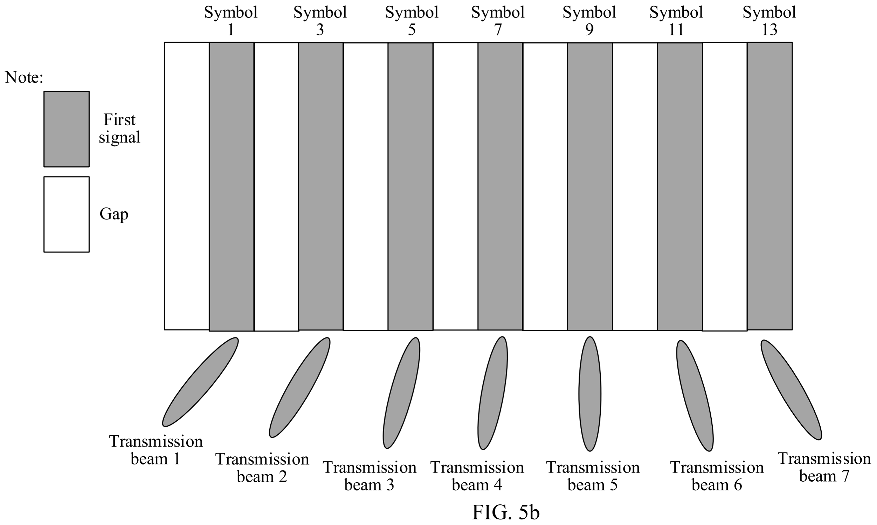

It should be further noted that in the examples and the figures of this application, an example in which one transmission beam corresponds to three symbols (that is, there is one corresponding AGC symbol before a symbol for each first signal and one corresponding gap (gap) symbol after the symbol for each first signal) is merely used for description, and should not be considered as a specific limitation on this application. For example, in FIG. 5b, one transmission beam may alternatively correspond to two symbols (that is, there is only one gap symbol between symbols for two adjacent first signals). In FIG. 5b, there may alternatively be a plurality of gap symbols between symbols for two adjacent first signals. This is not limited in this application.

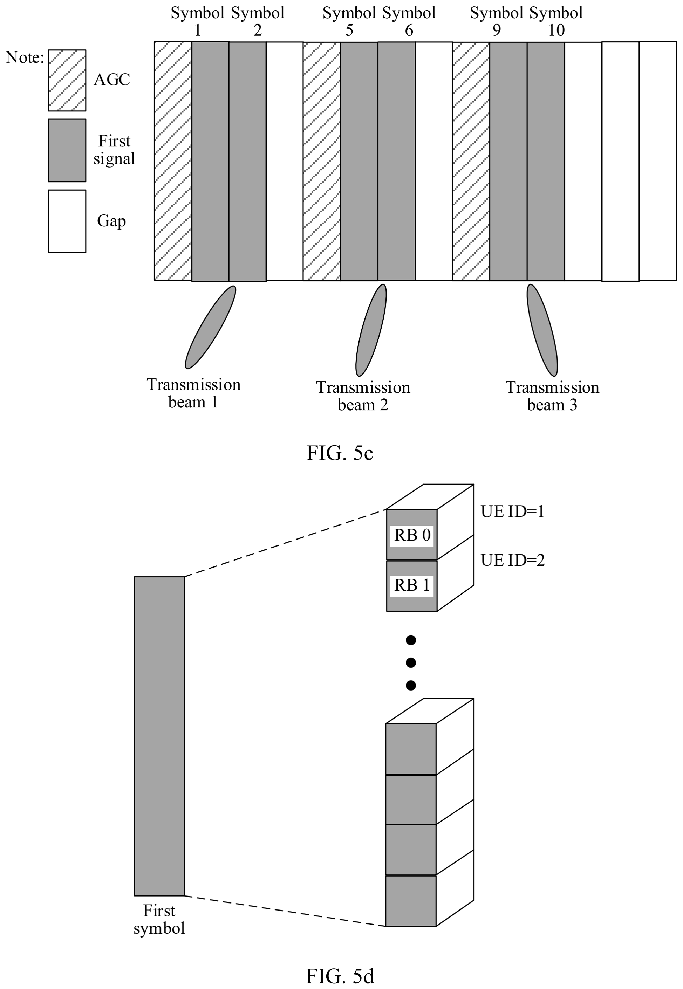

It should be further noted that in the figures of this application, that each first signal (or response information) occupies one symbol is merely used as an example, and this should not be considered as a specific limitation on this application either. In this application, the first signal (or the response information) may alternatively occupy a plurality of symbols. For example, in FIG. 5c, one first signal may occupy two symbols. It may be understood that a larger quantity of symbols occupied by the first signal indicates a larger quantity of terminal apparatuses determined by a resource set corresponding to the first symbol.

In the process of performing beam management, the first terminal apparatus determines, in a resource set of a symbol corresponding to each transmission beam, a resource for sending a first signal. The first signal is a reference signal or a reference sequence. When the first signal is the reference signal, the first signal includes but is not limited to any one of a channel state information-reference signal (channel state information-reference signal, CSI-RS), a DMRS, or a phase-tracking reference signal (phase-tracking reference signal, PT-RS); or when the first signal is the reference sequence, the first signal includes but is not limited to any one of a ZC sequence (also referred to as a Zadoff-Chu sequence), an m sequence, or a gold sequence. It should be noted that, if the first signal is not specifically stated in the following, the first signal may be the reference signal or the reference sequence. This is not specifically limited in this application. For ease of understanding and description, the following uses an example in which the first terminal apparatus determines, in the first resource set of the first symbol corresponding to the first transmission beam, the first resource for sending the first signal for detailed description.

In a possible implementation, the first terminal apparatus determines, from a first frequency domain resource set of the first symbol based on the identifier of the first terminal apparatus, a position of a first frequency domain resource corresponding to the identifier of the first terminal apparatus, and then determines the first resource based on the first frequency domain resource and the first symbol. It may be understood as that a frequency domain position of the frequency domain resource of the first resource, determined by the first terminal apparatus, in the frequency domain resource set of the first symbol is used to determine the identifier of the first terminal apparatus. The following uses an example in which the frequency domain resource of the first resource (that is, the first frequency domain resource) is a first RB or a first RE for description.

In Example 1, as shown in FIG. 5d, the frequency domain resource set corresponding to the first symbol includes *N_{RB}* RBs. It may be understood as that a resource is determined at a granularity of an RB. The first resource set corresponding to the first symbol includes *N_{RB}* resources, different resources in the *N_{RB}* resources are respectively used to determine identifiers of different terminal apparatuses, and the *N_{RB}* resources may be used to determine identifiers of *N_{RB}* terminal apparatuses. If a terminal apparatus 1 determines, based on a source ID/destination ID/SSID of the terminal apparatus 1, that an identifier of the terminal apparatus 1 is 1 (that is, a UE ID=1), the terminal apparatus 1 determines a frequency domain resource (for example, an RB 0) having a correspondence with the UE ID=1 as a frequency domain resource of a first resource of the terminal apparatus 1. If a terminal apparatus 2 determines, based on a source ID/destination ID/SSID of the terminal apparatus 2, that an identifier of the terminal apparatus 2 is 2 (that is, UE ID=2), the terminal apparatus 2 determines a frequency domain resource (for example, an RB 1) having a correspondence with UE ID=2 as a frequency domain resource of a first resource of the terminal apparatus 2.

It should be noted that, in the examples of this application, a granularity of frequency domain resources used to distinguish between identifiers of terminal apparatuses, a granularity of code domain resources used to distinguish between identifiers of terminal apparatuses, a granularity of frequency domain resources used to distinguish between beam indexes, and a granularity of code domain resources used to distinguish between beam indexes are all examples. This is not specifically limited in this application, and the same applies throughout this specification.

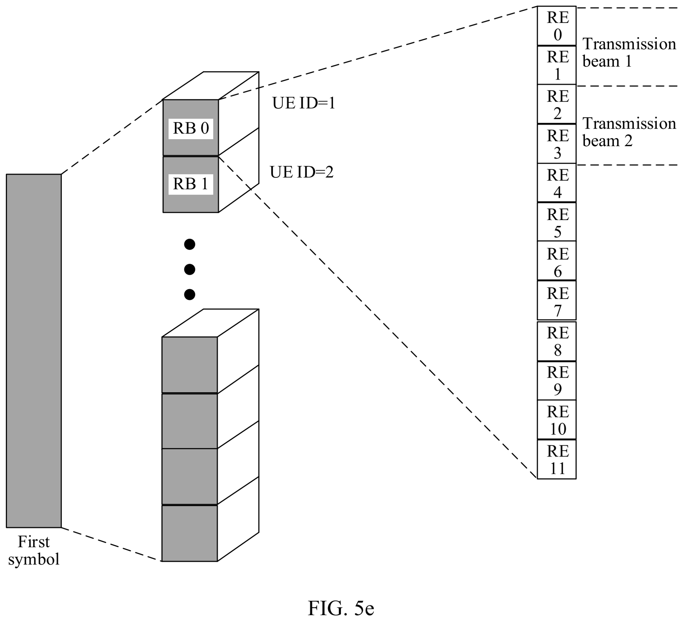

In a possible implementation of Example 1, when a frequency domain position of the first RB of the first resource in the frequency domain resource set corresponding to the first symbol is used to determine the identifier of the first terminal apparatus, a beam index of the first transmission beam used by the first terminal apparatus to send the first signal on the first resource may be further indicated through a second RE in the first RB. For example, transmission beams (or understood as transmission beam directions) used by different terminal apparatuses to send first signals on a same symbol may be different. As shown in FIG. 5e, the frequency domain resource set corresponding to the first symbol includes *N_{RB}* RBs, and each RB includes (or understood as corresponds to) 12 REs. An identifier of a terminal apparatus is indicated (or understood as determined) at a granularity of an RB, and a beam index of a transmission beam of the terminal apparatus on the first symbol is indicated (or understood as determined) at a granularity of two REs. When the terminal apparatus 1 sends the first signal on the first symbol through the transmission beam 1, the terminal apparatus 1 may determine, based on the identifier of the terminal apparatus 1, that the frequency domain resource of the first resource of the terminal apparatus 1 is the RB 0, and determine, based on a beam index of the transmission beam 1, to send the first signal through an RE 0 and an RE 1 (that is, a second RE corresponding to the terminal apparatus 1) in the RB 0. When the terminal apparatus 2 sends the first signal on the first symbol through the transmission beam 2, the terminal apparatus 2 may determine, based on the identifier of the terminal apparatus 2, that the frequency domain resource of the first resource of the terminal apparatus 2 is the RB 1, and determine, based on a beam index of the transmission beam 2, to send the first signal through an RE 2 and an RE 3 (that is, a second RE corresponding to the terminal apparatus 2) in the RB 1.

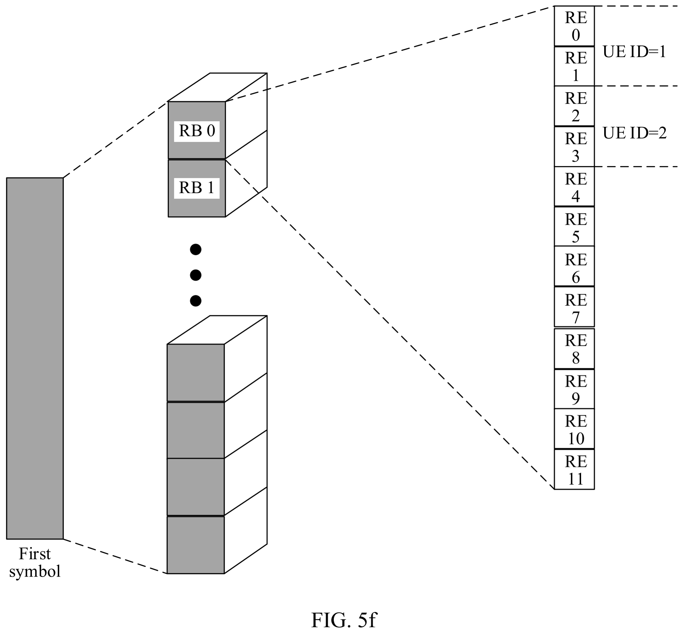

In Example 2, as shown in FIG. 5f, the frequency domain resource set corresponding to the first symbol includes *N_{RB}* RBs, and each RB includes (or understood as corresponds to) 12 REs. It may be understood that if a resource is determined at a granularity of two REs, the first resource set corresponding to the first symbol may include *N_{RB}* × 6 resources, different resources in the *N_{RB}* × 6 resources are respectively used to determine identifiers of different terminal apparatuses, and the *N_{RB}* × 6 resources may be used to determine identifiers of *N_{RB}* × 6 terminal apparatuses. If the terminal apparatus 1 determines, based on the source ID/destination ID/SSID of the terminal apparatus 1, that the identifier of the terminal apparatus 1 is UE ID=1, the terminal apparatus 1 determines a frequency domain resource (for example, the RE 0 and the RE 1 in the RB 0) having a correspondence with UE ID=1 as a frequency domain resource used by the terminal apparatus 1 to send the first signal on the first symbol. If the terminal apparatus 2 determines, based on the source ID/destination ID/SSID of the terminal apparatus 2, that the identifier of the terminal apparatus 2 is UE ID=2, the terminal apparatus 2 determines a frequency domain resource (for example, an RE 2 and an RE 3 in the RB 0) having a correspondence with UE ID=1 as a frequency domain resource used by the terminal apparatus 2 to send the first signal on the first symbol.

In a possible implementation, when the first signal is the reference sequence, the frequency domain resource of the first resource and a code domain resource of the first resource that are determined by the first terminal apparatus are used to determine the identifier of the first terminal apparatus. In other words, different terminal apparatuses correspond to different code domain resources (or understood as correspond to different cyclic shifts). The first terminal apparatus may determine, based on the identifier of the first terminal apparatus, the first resource in the first resource set corresponding to the first symbol, and the frequency domain resource of the first resource and the code domain resource of the first resource are both determined based on the identifier of the first terminal apparatus.

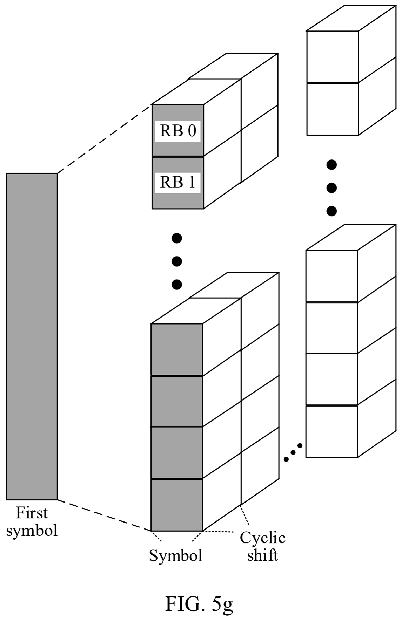

In Example 3, as shown in FIG. 5g, the frequency domain resource set corresponding to the first symbol includes *N_{RB}* RBs, and a quantity of code domain resources (or understood as cyclic shifts) on each RB is *N_{cs}.* It may be understood as that different terminal apparatuses in a plurality of terminal apparatuses correspond to different code domain resources. Further, a resource used by each terminal apparatus to send a first signal may be jointly determined at a granularity of one RB and one code domain resource. The first resource set corresponding to the first symbol includes *N_{RB}* × *N_{cs}* resources, different resources in the *N_{RB}* × *N_{cs}* resources are respectively used to determine identifiers of different terminal apparatuses, and the *N_{RB}* × *N_{cs}* resources may be used to determine identifiers of *N_{RB}* × *N_{cs}* terminal apparatuses. When the terminal apparatus 1 sends the first signal on the first symbol, the terminal apparatus 1 may determine, based on the identifier of the terminal apparatus 1, that the identifier of the terminal apparatus 1 is UE ID=1. Further, the terminal apparatus 1 determines a frequency domain resource and a code domain resource (for example, a code domain resource 1 on the RB 0, or understood as a 1^{st} cyclic shift on the RB 0) that have a correspondence with UE ID=1 as a frequency domain resource and a code domain resource that are used by the terminal apparatus 1 to send the first signal on the first symbol. When the terminal apparatus 2 sends the first signal on the first symbol, the terminal apparatus 2 may determine, based on the identifier of the terminal apparatus 2, that the identifier of the terminal apparatus 2 is UE ID=2. Further, the terminal apparatus 2 determines a frequency domain resource and a code domain resource (for example, a code domain resource 2 on the RB 0, or understood as a 2^{nd} cyclic shift on the RB 0) that have a correspondence with UE ID=2 as a frequency domain resource and a code domain resource that are used by the terminal apparatus 2 to send the first signal on the first symbol.

In Example 4, the frequency domain resource set corresponding to the first symbol includes *N_{RB}* RBs, and a quantity of code domain resources (or understood as cyclic shifts) on each RB is *N_{cs}.* In this case, the identifier of the first terminal apparatus may be further determined based on the frequency domain position of the first RB of the first resource in the frequency domain resource set corresponding to the first symbol, and then the beam index of the first transmission beam is determined based on the code domain resource of the first resource. For example, transmission beams (or understood as transmission beam directions) used by different terminal apparatuses to send first signals on a same symbol may be different. As shown in FIG. 5g, the frequency domain resource set corresponding to the first symbol includes *N_{RB}* RBs, and a quantity of code domain resources (or understood as cyclic shifts) on each RB is *N_{cs}.* An identifier of a terminal apparatus is indicated (or understood as determined) at a granularity of an RB, and a beam index of a transmission beam of the terminal apparatus on the first symbol is indicated (or understood as determined) at a granularity of one code domain resource (or cyclic shift). The terminal apparatus 1 sends the first signal on the first symbol through the transmission beam 1. The terminal apparatus 1 may determine, based on the identifier of the terminal apparatus 1, that the frequency domain resource of the first resource of the terminal apparatus 1 is the RB 0, and determine, based on the beam index of the transmission beam 1, to send the first signal on the RB 0 through a code domain resource 1 (or understood as a 1^{st} cyclic shift). The terminal apparatus 2 sends the first signal on the first symbol through the transmission beam 2. The terminal apparatus 2 may determine, based on the identifier of the terminal apparatus 2, that the frequency domain resource of the first resource of the terminal apparatus 2 is the RB 1, and determine, based on the beam index of the transmission beam 2, to send the first signal on the RB 0 through a code domain resource 2 (or understood as a 2^{nd} cyclic shift).

S302: The first terminal apparatus sends the first signal on the first resource through the first transmission beam.

After the first resource is determined from the first resource set corresponding to the first symbol, the first terminal apparatus sends the first signal on the first resource through the first transmission beam. Correspondingly, the second terminal apparatus receives the first signal from the first terminal apparatus on the first resource, and determines the identifier of the first terminal apparatus based on the frequency domain resource of the first resource.

In a possible implementation, after the second terminal apparatus receives the first signal from the first terminal apparatus on the first resource, the second terminal apparatus determines the second resource based on the identifier of the first terminal apparatus. A second symbol on the second resource is a symbol corresponding to the first symbol on the first resource, and a frequency domain resource of the second resource is determined based on the identifier of the first terminal apparatus. After the second resource is determined, the second terminal apparatus sends, on the second resource, response information for the first signal to the first terminal apparatus, where the response information indicates that a reference signal received power (reference signal received power, RSRP) of the first transmission beam is greater than or equal to a first threshold, and/or a RSRP of the first transmission beam is a largest value in RSRPs of a plurality of transmission beams of the first terminal apparatus. Further, the first terminal apparatus determines, based on the response information, that the first transmission beam is a target transmission beam, that is, determines that the first transmission beam is a transmission beam used by the first terminal apparatus to subsequently send a signal to the second terminal apparatus.

The first threshold is a preset threshold, and the first threshold may be predefined, configured, or preconfigured. It may be understood that the "predefined" may be understood as that information is defined in a standard, does not need to be configured by another device (nor changed by a network device or another terminal device), and is recorded/written in advance in hardware and/or software of a terminal device. The "configured" includes configuration performed by a network device and configuration performed by a terminal device. If configuration is performed by the network device, the configuration may be changed by using a SIB or RRC signaling. If configuration is performed by the terminal device, the configuration may be changed based on PC5-RRC signaling. The "preconfigured" may be understood as that information is recorded/written in advance in hardware and/or software of UE, is determined by a factory device vendor, and may be changed by using software or hardware. The response information may be understood as reporting information of the second terminal apparatus for a beam used to send the first signal, or may be understood as indication information for the first terminal apparatus (indicating a specific transmission beam used by the first terminal apparatus), or understood as feedback information for beam sweeping of the first terminal apparatus (used to feed back a specific transmission beam that is available).

In an example, the second terminal apparatus separately receives the first signals from the first terminal apparatus on the symbol 1, the symbol 4, the symbol 7, and the symbol 10, where a RSRP of the first signal received on the symbol 1 is greater than or equal to the first threshold, a RSRP of the first signal received on the symbol 4 is greater than or equal to the first threshold, a RSRP of the first signal received on the symbol 7 is less than the first threshold, and a RSRP of the first signal received on the symbol 10 is less than the first threshold. In this case, the second terminal apparatus sends response information on a symbol corresponding to the symbol 1, sends response information on a symbol corresponding to the symbol 4, does not send response information on a symbol corresponding to the symbol 7, and does not send response information on a symbol corresponding to the symbol 10. Further, after the first terminal apparatus receives the response information, the first terminal apparatus determines a transmission beam corresponding to the symbol 1 or a transmission beam corresponding to the symbol 4 as the target transmission beam.

In another example, the second terminal apparatus separately receives the first signals from the first terminal apparatus on the symbol 1, the symbol 4, the symbol 7, and the symbol 10, where a RSRP of the first signal received on the symbol 1 is greater than or equal to the first threshold, a RSRP of the first signal received on the symbol 4 is greater than or equal to the first threshold, a RSRP of the first signal received on the symbol 7 is less than the first threshold, and a RSRP of the first signal received on the symbol 10 is less than the first threshold. In addition, the RSRP of the first signal received on the symbol 1 is greater than the RSRP of the first signal received on the symbol 4. In this case, the second terminal apparatus may send response information only on a symbol corresponding to the symbol 1. Further, the first terminal apparatus determines, based on the received response information, a transmission beam corresponding to the symbol 1 as the target transmission beam.

It should be noted that the second symbol on the second resource is the symbol corresponding to the first symbol on the first resource. It may be understood as that there is a correspondence between a symbol (for example, the second symbol on the second resource) of a resource used by the second terminal apparatus to send the response information and a symbol (for example, the first symbol on the first resource) of a resource used by the first terminal apparatus to send the first signal, or it may be understood as that the second symbol is a response symbol corresponding to the first symbol, or it may be understood as that the second symbol is used to transmit response information corresponding to content (that is, the first signal) transmitted on the first symbol.

In a possible implementation, the second symbol belongs to a second time domain unit, and symbols in the second time domain unit are in one-to-one correspondence with symbols in the first time domain unit. It may be understood as that, in the process of performing beam management, the plurality of transmission beams of the first terminal apparatus correspond to the plurality of symbols in the first time domain unit. The first terminal apparatus sends the first signals on different symbols in the plurality of symbols through different transmission beams. Further, after receiving the first signals on the plurality of symbols in the first time domain unit, the second terminal apparatus may send, on a plurality of symbols in the second time domain unit, response information for the first signals sent on the beams. The plurality of symbols in the first time domain unit are in one-to-one correspondence with the plurality of symbols in the second time domain unit. To be specific, after a first signal is sent on a symbol in the first time domain unit, response information for the first signal may be sent on a symbol that corresponds to the foregoing symbol and that is in the second time domain unit. It should be noted that a time domain unit (including the first time domain unit and the subsequent second time domain unit) mentioned in this application may be a slot or a combination of a plurality of symbols. This is not specifically limited in this application. For ease of description, an example in which the time domain unit is a slot is used below to describe this solution, and this should not be considered as a specific limitation on this application.

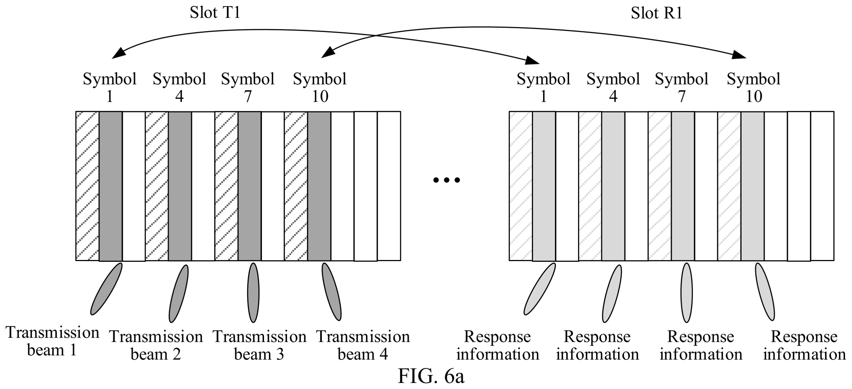

For example, FIG. 6a is a diagram of a correspondence between a first time domain unit and a second time domain unit according to an embodiment of this application. In FIG. 6a, the first terminal apparatus sends the first signals to the second terminal apparatus on the symbol 1, the symbol 4, the symbol 7, and the symbol 10 in the slot T1 (that is, the first time domain unit) through the transmission beam 1 to the transmission beam 4 respectively, and the second terminal apparatus sends response information to the first terminal apparatus on a symbol 1, a symbol 4, a symbol 7, and a symbol 10 in a slot R1 (that is, the second time domain unit) respectively. The symbol 1 in the slot R1 corresponds to the symbol 1 in the slot T1 (or the symbol 1 in the slot R1 is a symbol corresponding to the symbol 1 in the slot T1). In other words, the response information sent on the symbol 1 in the slot R1 is response information for the first signal sent on the symbol 1 in the slot T1 (that is, the first signal sent by the transmission beam 1). The symbol 4 in the slot R1 corresponds to the symbol 4 in the slot T1. In other words, the response information sent on the symbol 4 in the slot R1 is response information for the first signal sent on the symbol 4 in the slot T1 (that is, the first signal sent by the transmission beam 2). The symbol 7 in the slot R1 corresponds to the symbol 7 in the slot T1. In other words, the response information sent on the symbol 7 in the slot R1 is response information for the first signal sent on the symbol 7 in the slot T1 (that is, the first signal sent by the transmission beam 3). The symbol 10 in the slot R1 corresponds to the symbol 10 in the slot T1. In other words, the response information sent on the symbol 10 in the slot R1 is response information for the first signal sent on the symbol 10 in the slot T1 (that is, the first signal sent by the transmission beam 4).

In another possible implementation, the second resource belongs to a second resource set corresponding to the second symbol, and frequency domain resources of resources in the second resource set are determined based on identifiers of different terminal apparatuses. It may be understood as that, in the process of performing beam management, when the first signal is sent on the first symbol, frequency domain resources of different resources in the first resource set corresponding to the first symbol are respectively used to determine the identifiers of different transmit end apparatuses; and when the response information for the first signal is sent on the second symbol, the frequency domain resources of different resources in the second resource set corresponding to the second symbol are respectively used to determine the identifiers of different transmit end apparatuses. The first terminal apparatus determines (or understood as indicates) the identifier of the first terminal apparatus based on the position of the frequency domain resource of the first resource in the frequency domain resource set corresponding to the first symbol. When sending the response information for the first signal on the second symbol corresponding to the first symbol, the second terminal apparatus determines (or understood as indicates) the identifier of the first terminal apparatus based on a position of the frequency domain resource of the second resource in the frequency domain resource set corresponding to the second symbol.

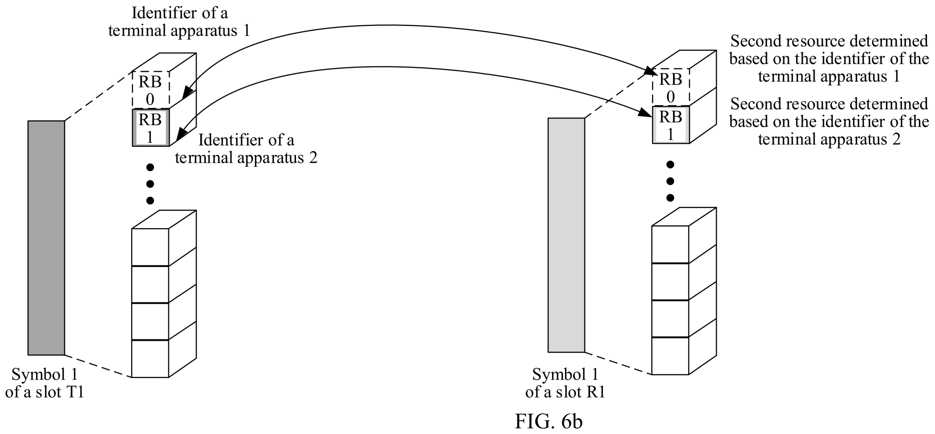

In other words, in a possibility, a frequency domain position of the frequency domain resource of the second resource in the frequency domain resource set of the second symbol is the same as a frequency domain position of the frequency domain resource of the first resource in the frequency domain resource set of the first symbol; and/or a code domain resource of the second resource is also the same as the code domain resource of the first resource. For example, FIG. 6b is a diagram of a correspondence between a first resource and a second resource according to an embodiment of this application. In FIG. 6b, the terminal apparatus 1 sends the first signal to a terminal apparatus 3 on a resource 1 corresponding to the symbol 1 in the slot T1, where a frequency domain resource of the resource 1 is the RB 0, and a position of the RB 0 in a frequency domain resource set corresponding to the symbol 1 is used to determine the identifier of the terminal apparatus 1. The terminal apparatus 2 sends the first signal to the terminal apparatus 3 on a resource 2 corresponding to the symbol 1 in the slot T1, where a frequency domain resource of the resource 2 is the RB 1, and a position of the RB 1 in the frequency domain resource set corresponding to the symbol 1 is used to determine the identifier of the terminal apparatus 2. After the terminal apparatus 3 receives the first signals from the terminal apparatus 1 and the terminal apparatus 2 on the symbol 1 in the slot T1, the terminal apparatus 3 respectively sends response information for the first signals to the terminal apparatus 1 and the terminal apparatus 2 on the symbol 1 that is in the slot R1 and that corresponds to the symbol 1 in the slot T1. The response information is sent to the terminal apparatus 1 on a resource 3 corresponding to the symbol 1 in the slot R1, and a position of the frequency domain resource RB 0 of the resource 3 in a frequency domain resource set corresponding to the symbol 1 is used to determine the identifier of the terminal apparatus 1 (or understood as determined based on the identifier of the terminal apparatus 1). The response information is sent to the terminal apparatus 1 on a resource 4 corresponding to the symbol 1 in the slot R1, and a position of a frequency domain resource RB 1 of the resource 4 in the frequency domain resource set corresponding to the symbol 1 is used to determine the identifier of the terminal apparatus 2 (or understood as determined based on the identifier of the terminal apparatus 2).

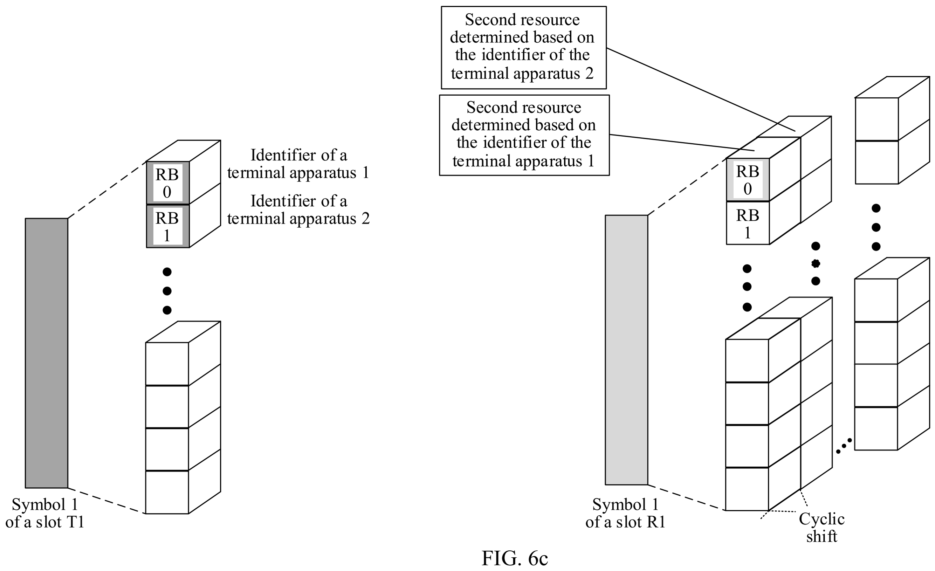

In another possibility, a frequency domain position of the frequency domain resource of the second resource in the frequency domain resource set of the second symbol is different from a frequency domain position of the frequency domain resource of the first resource in the frequency domain resource set of the first symbol; and/or a code domain resource of the second resource is different from the code domain resource of the first resource. For example, FIG. 6c is a diagram of a correspondence between a first resource and a second resource according to an embodiment of this application. In FIG. 6c, the terminal apparatus 1 sends the first signal to a terminal apparatus 3 on a resource 1 corresponding to the symbol 1 in the slot T1, where a frequency domain resource of the resource 1 is the RB 0, and a position of the RB 0 in a frequency domain resource set corresponding to the symbol 1 is used to determine the identifier of the terminal apparatus 1. The terminal apparatus 2 sends the first signal to the terminal apparatus 3 on a resource 2 corresponding to the symbol 1 in the slot T1, where a frequency domain resource of the resource 2 is the RB 1, and a position of the RB 1 in the frequency domain resource set corresponding to the symbol 1 is used to determine the identifier of the terminal apparatus 2. After the terminal apparatus 3 receives the first signals from the terminal apparatus 1 and the terminal apparatus 2 on the symbol 1 in the slot T1, the terminal apparatus 3 respectively sends response information for the first signals to the terminal apparatus 1 and the terminal apparatus 2 on the symbol 1 that is in the slot R1 and that corresponds to the symbol 1 in the slot T1. The response information is sent to the terminal apparatus 1 on a resource 3 corresponding to the symbol 1 in the slot R1, where a frequency domain resource of the resource 3 is the RB 0, a code domain resource of the resource 3 is the 1^{st} cyclic shift of the RB 0, and the frequency domain resource of the resource 3 and the code domain resource of the resource 3 are used to determine the identifier of the terminal apparatus 1. The response information is sent to the terminal apparatus 1 on a resource 4 corresponding to the symbol 1 in the slot R1, where a frequency domain resource of the resource 4 is the RB 0, a code domain resource of the resource 4 is the 2^{nd} cyclic shift of the RB 0, and the frequency domain resource of the resource 4 and the code domain resource of the resource 4 are used to determine the identifier of the terminal apparatus 2.

In a possible implementation, in this application, a resource set corresponding to one symbol may be used by different terminal apparatuses to send a first signal; or a resource set corresponding to one symbol may be used by different terminal apparatuses to send the response information for the first signal; or some resources in a resource set corresponding to one symbol may be used by a plurality of terminal apparatuses to the send response information for the first signal, and the other resources may be used by another terminal apparatus to send a signal used for beam management.

The following uses the second resource set corresponding to the second symbol as an example to describe a case in which some resources in a resource set corresponding to one symbol may be used by a plurality of terminal apparatuses to send the response information for the first signal, and the other resources may be used by another terminal apparatus to send a signal used for beam management. The second resource set includes a second resource used by the second terminal apparatus to send the response information for the first signal, and may further include a resource used by a third terminal apparatus to send a signal (for example, referred to as a second signal) used for beam management. The second signal is a signal sent by the third terminal apparatus, and the second signal is a signal used by the third terminal apparatus to perform beam management. Alternatively, the second signal may be a reference signal or a reference sequence. For descriptions of the reference signal and the reference sequence, refer to the foregoing explanations in which the first signal is a reference signal or a reference sequence. Details are not described herein again.

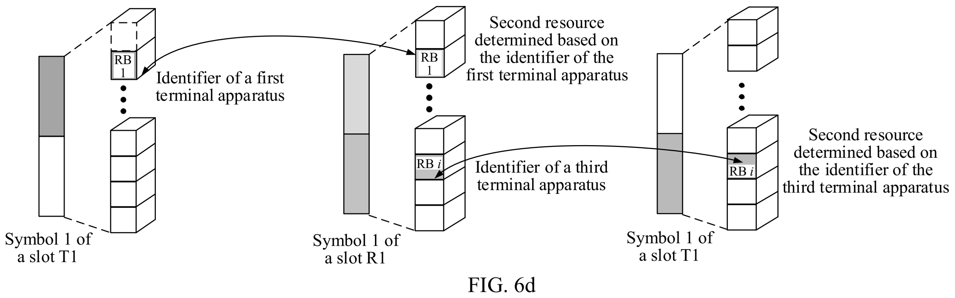

For example, refer to FIG. 6d. The first terminal apparatus sends the first signal to the second terminal apparatus on a first resource on the symbol 1 in the slot T1, and the second terminal apparatus sends, to the first terminal apparatus on a second resource on the symbol 1 in the slot R1, response information corresponding to the first signal. The third terminal apparatus sends the second signal to a fourth terminal apparatus on a third resource on the symbol 1 in the slot R1, and the fourth terminal apparatus sends, to the third terminal apparatus on a fourth resource on the symbol 1 in the slot R2, response information corresponding to the second signal.

When the first signal and the second signal are reference signals (or reference sequences), a time domain resource of the second resource is the same as a time domain resource of the third resource, and the frequency domain resource of the second resource is different from a frequency domain resource of the third resource. When the first signal and the second signal are reference sequences, the time domain resource of the second resource is the same as the time domain resource of the third resource, the frequency domain resource of the second resource may be different from the frequency domain resource of the third resource, and the code domain resource of the second resource may be different from a code domain resource of the third resource.

In conclusion, according to the method shown in FIG. 3, when sending a signal through a transmission beam, a transmit end apparatus may indicate the transmit end apparatus of the signal based on a sending resource (that is, the first resource) of the signal. Therefore, when a plurality of transmit end apparatuses (including the first terminal apparatus mentioned in this application) send signals through different transmission beams in the SL communication scenario, the transmit end apparatuses corresponding to all the transmission beams may be distinguished from each other based on resources for sending the signals through the transmission beams. This helps improve accuracy of a transmission beam determined in the SL communication scenario, thereby helping improve high-frequency communication quality of the SL.

It may be understood that, to implement functions in the foregoing embodiments, the terminal device includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by a transceiver unit of computer software depends on particular application scenarios and design constraint conditions of the technical solutions.

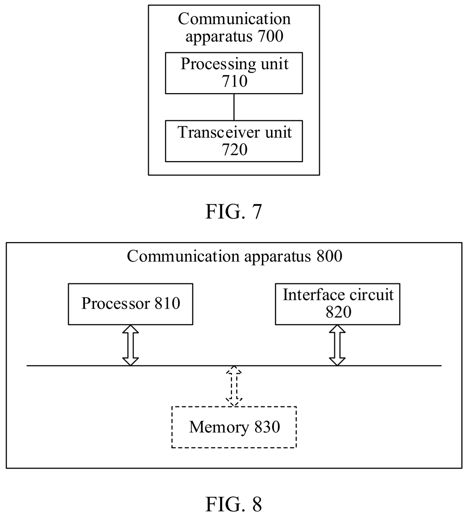

FIG. 7 and FIG. 8 are diagrams of possible structures of communication apparatuses according to embodiments of this application. These communication apparatuses may be configured to implement functions of the second terminal apparatus in the foregoing method embodiments or implement functions of the first terminal apparatus in the foregoing method embodiments. Therefore, beneficial effects of the foregoing method embodiments can also be achieved. In this embodiment of this application, the communication apparatus may be the terminal apparatus 120 shown in FIG. 1, or may be a module (for example, a chip) used in the terminal apparatus 120.

As shown in FIG. 7, the communication apparatus 700 includes a processing unit 710 and a transceiver unit 720. The communication apparatus 700 is configured to implement the function of the first terminal apparatus in the method embodiment shown in FIG. 3. The processing unit 710 is configured to determine a first resource based on an identifier of a first terminal apparatus, where a frequency domain resource of the first resource is used to determine the identifier of the first terminal apparatus, the first resource belongs to a first resource set corresponding to a first symbol, and a plurality of resources in the first resource set are respectively used to determine identifiers of different terminal apparatuses. The transceiver unit 720 is configured to send a first signal on the first resource through a first transmission beam.

In a possible implementation, a plurality of transmission beams of the first terminal apparatus correspond to a plurality of symbols in a first time domain unit, the plurality of transmission beams include the first transmission beam, and the plurality of symbols include the first symbol.

In a possible implementation, the transceiver unit 720 is further configured to receive, on a second resource, response information for the first signal from a second terminal apparatus, where a second symbol on the second resource is a symbol corresponding to the first symbol on the first resource, and a frequency domain resource of the second resource is determined based on the identifier of the first terminal apparatus. The processing unit 710 is further configured to determine the first transmission beam as a target transmission beam based on the response information.

In a possible implementation, the second resource belongs to a second resource set corresponding to the second symbol, and frequency domain resources of resources in the second resource set are determined based on identifiers of different terminal apparatuses.

In a possible implementation, the second symbol belongs to a second time domain unit, and symbols in the second time domain unit are in one-to-one correspondence with symbols in the first time domain unit.

In a possible implementation, a frequency domain position of the frequency domain resource of the first resource in a frequency domain resource set of the first symbol is used to determine the identifier of the first terminal apparatus.

In a possible implementation, the frequency domain resource of the first resource is a first resource block RB or a first resource element RE.

In a possible implementation, the frequency domain resource of the first resource is the first RB, and a second RE in the first RB is used to determine a beam index of the first transmission beam.

In a possible implementation, a frequency domain position of the second RE in the first RB is used to determine the beam index of the first transmission beam.

In a possible implementation, the first signal is a reference signal or a reference sequence.

In a possible implementation, the first signal is a reference sequence, and the frequency domain resource of the first resource and a code domain resource of the first resource are used to determine the identifier of the first terminal apparatus.

In a possible implementation, the first signal is a reference sequence, and a code domain resource of the first resource is used to determine a beam index of the first transmission beam.

In a possible implementation, the second resource set corresponding to the second symbol further includes a third resource, a frequency domain resource of the third resource is different from the frequency domain resource of the second resource, the third resource is used by a third terminal apparatus to send a second signal, the second signal is different from the first signal, and the frequency domain resource of the third resource is used to determine an identifier of the third terminal apparatus.

For more detailed descriptions of the transceiver unit 720 and the processing unit 710, refer to related descriptions of the first terminal apparatus in the method embodiment shown in FIG. 3.

As shown in FIG. 7, the communication apparatus 700 includes a processing unit 710 and a transceiver unit 720. The communication apparatus 700 is configured to implement the function of the second terminal apparatus in the method embodiment shown in FIG. 3. The transceiver unit 720 is configured to receive a first signal from a first terminal apparatus on a first resource, where a frequency domain resource of the first resource is used to determine an identifier of the first terminal apparatus, the first resource belongs to a first resource set corresponding to a first symbol, and a plurality of resources in the first resource set are respectively used to determine identifiers of different terminal apparatuses.

In a possible implementation, a plurality of transmission beams of the first terminal apparatus correspond to a plurality of symbols in a first time domain unit, the plurality of transmission beams include the first transmission beam, and the plurality of symbols include the first symbol.

In a possible implementation, the processing unit 710 is configured to determine a second resource, where a second symbol on the second resource is a symbol corresponding to the first symbol on the first resource, and a frequency domain resource of the second resource is determined based on the identifier of the first terminal apparatus. The transceiver unit 720 is further configured to send, to the first terminal apparatus on the second resource, response information for the first signal.

In a possible implementation, the second resource belongs to a second resource set corresponding to the second symbol, and frequency domain resources of resources in the second resource set are determined based on identifiers of different terminal apparatuses.

In a possible implementation, the second symbol belongs to a second time domain unit, and symbols in the second time domain unit are in one-to-one correspondence with symbols in the first time domain unit.

In a possible implementation, a frequency domain position of the frequency domain resource of the first resource in a frequency domain resource set of the first symbol is used to determine the identifier of the first terminal apparatus.

In a possible implementation, the frequency domain resource of the first resource is a first resource block RB or a first resource element RE.

In a possible implementation, the first frequency domain unit is the first RB, and a second RE in the first RB is used to determine a beam index of the first transmission beam.

In a possible implementation, a frequency domain position of the second RE in the first RB is used to determine the beam index of the first transmission beam.

In a possible implementation, the first signal is a reference signal or a reference sequence.

In a possible implementation, the first signal is a reference sequence, and the frequency domain resource of the first resource and a code domain resource of the first resource are used to determine the identifier of the first terminal apparatus.

In a possible implementation, the first signal is a reference sequence, and a code domain resource of the first resource is used to determine a beam index of the first transmission beam.

In a possible implementation, the second resource set corresponding to the second symbol further includes a third resource, a frequency domain resource of the third resource is different from the frequency domain resource of the second resource, the third resource is used by a third terminal apparatus to send a second signal, the second signal is different from the first signal, and a frequency domain unit of the third resource is used to determine an identifier of the third terminal apparatus.

For more detailed descriptions of the transceiver unit 720 and the processing unit 710, refer to related descriptions of the second terminal apparatus in the method embodiment shown in FIG. 3.

As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run instructions, or store data generated after the processor 810 runs instructions.

When the communication apparatus 800 is configured to implement the method shown in FIG. 3, the processor 810 is configured to implement a function of the processing unit 710, and the interface circuit 820 is configured to implement a function of the transceiver unit 720.

When the communication apparatus is a chip used in the first terminal apparatus, the chip implements the function of the first terminal apparatus in the foregoing method embodiments. That the chip receives information from a base station may be understood as that the information is first received by other modules (for example, a radio frequency module or an antenna) in the terminal, and then sent to the chip in the terminal by these modules. That the chip in the terminal sends information to the base station may be understood as that the information is first sent to other modules (for example, a radio frequency module or an antenna) in the terminal, and then sent to the base station by these modules.

When the communication apparatus is a chip used in the second terminal apparatus, the chip implements the function of the second terminal apparatus in the foregoing method embodiments. That the chip receives information from a base station may be understood as that the information is first received by other modules (for example, a radio frequency module or an antenna) in the terminal, and then sent to the chip in the terminal by these modules. That the chip in the terminal sends information to the base station may be understood as that the information is first sent to other modules (for example, a radio frequency module or an antenna) in the terminal, and then sent to the base station by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entity A and the entity B herein each may be a RAN node or a terminal, or may be a module in a RAN node or a terminal. Information receiving and sending may be information exchange between a RAN node and a terminal, for example, information exchange between a base station and a terminal. Information receiving and sending may alternatively be information exchange between two RAN nodes, for example, information exchange between a CU and a DU. Information receiving and sending may alternatively be information exchange between different modules in an apparatus, for example, information exchange between a chip in a terminal and another module in the terminal, or information exchange between a chip in a base station and another module in the base station.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well known in the art. For example, a storage medium is coupled to the processor, so that the processor can read information from the storage medium and write information into the storage medium. The storage medium may alternatively be a component of the processor. The processor and the storage medium may be disposed in the ASIC. In addition, the ASIC may be disposed in a base station or a terminal. The processor and the storage medium may also exist in the base station or the terminal as discrete components.

All or some of the foregoing embodiments may be implemented by using software, hardware, firmware, or any combination thereof. When embodiments are implemented by software, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
determining a first resource based on an identifier of a first terminal apparatus, wherein a frequency domain resource of the first resource is used to determine the identifier of the first terminal apparatus, the first resource belongs to a first resource set corresponding to a first symbol, and a plurality of resources in the first resource set are respectively used to determine identifiers of different terminal apparatuses; and
sending a first signal on the first resource through a first transmission beam.

2. The method according to claim 1, wherein a plurality of transmission beams of the first terminal apparatus correspond to a plurality of symbols in a first time domain unit, the plurality of transmission beams comprise the first transmission beam, and the plurality of symbols comprise the first symbol.

3. The method according to claim 1 or 2, wherein the method further comprises:
receiving, on a second resource, response information for the first signal from a second terminal apparatus, wherein a second symbol on the second resource is a symbol corresponding to the first symbol on the first resource, and a frequency domain resource of the second resource is determined based on the identifier of the first terminal apparatus; and
determining the first transmission beam as a target transmission beam based on the response information.

4. The method according to claim 3, wherein the second resource belongs to a second resource set corresponding to the second symbol, and frequency domain resources of resources in the second resource set are determined based on identifiers of different terminal apparatuses.

5. The method according to claim 3 or 4, wherein the second symbol belongs to a second time domain unit, and symbols in the second time domain unit are in one-to-one correspondence with symbols in the first time domain unit.

6. The method according to any one of claims 1 to 5, wherein that the frequency domain resource of the first resource is used to determine the identifier of the first terminal apparatus comprises:
a frequency domain position of the frequency domain resource of the first resource in a frequency domain resource set of the first symbol is used to determine the identifier of the first terminal apparatus.

7. The method according to claim 6, wherein the frequency domain resource of the first resource is a first resource block RB or a first resource element RE.

8. The method according to claim 7, wherein the frequency domain resource of the first resource is the first RB, and a second RE in the first RB is used to determine a beam index of the first transmission beam.

9. The method according to claim 8, wherein that the second RE in the first RB is used to determine the beam index of the first transmission beam comprises:
a frequency domain position of the second RE in the first RB is used to determine the beam index of the first transmission beam.

10. The method according to any one of claims 1 to 9, wherein the first signal is a reference signal or a reference sequence.

11. The method according to claim 1, wherein the first signal is a reference sequence, and that the frequency domain resource of the first resource is used to determine the identifier of the first terminal apparatus comprises:
the frequency domain resource of the first resource and a code domain resource of the first resource are used to determine the identifier of the first terminal apparatus.

12. The method according to claim 1, wherein the first signal is a reference sequence, and a code domain resource of the first resource is used to determine a beam index of the first transmission beam.

13. The method according to any one of claims 3 to 12, wherein the second resource set corresponding to the second symbol further comprises a third resource, a frequency domain resource of the third resource is different from the frequency domain resource of the second resource, the third resource is used by a third terminal apparatus to send a second signal, the second signal is different from the first signal, and the frequency domain resource of the third resource is used to determine an identifier of the third terminal apparatus.

14. A communication method, wherein the method comprises:
receiving a first signal from a first terminal apparatus on a first resource, wherein a frequency domain resource of the first resource is used to determine an identifier of the first terminal apparatus, the first resource belongs to a first resource set corresponding to a first symbol, and a plurality of resources in the first resource set are respectively used to determine identifiers of different terminal apparatuses.

15. The method according to claim 14, wherein a plurality of transmission beams of the first terminal apparatus correspond to a plurality of symbols in a first time domain unit, the plurality of transmission beams comprise the first transmission beam, and the plurality of symbols comprise the first symbol.

16. The method according to claim 14 or 15, wherein the method further comprises:
determining a second resource, wherein a second symbol on the second resource is a symbol corresponding to the first symbol on the first resource, and a frequency domain resource of the second resource is determined based on the identifier of the first terminal apparatus; and
sending, to the first terminal apparatus on the second resource, response information for the first signal.

17. The method according to claim 16, wherein the second resource belongs to a second resource set corresponding to the second symbol, and frequency domain resources of resources in the second resource set are determined based on identifiers of different terminal apparatuses.

18. The method according to claim 16 or 17, wherein the second symbol belongs to a second time domain unit, and symbols in the second time domain unit are in one-to-one correspondence with symbols in the first time domain unit.

19. The method according to any one of claims 14 to 18, wherein that the frequency domain resource of the first resource is used to determine the identifier of the first terminal apparatus comprises:
a frequency domain position of the frequency domain resource of the first resource in a frequency domain resource set of the first symbol is used to determine the identifier of the first terminal apparatus.

20. The method according to claim 19, wherein the frequency domain resource of the first resource is a first resource block RB or a first resource element RE.

21. The method according to claim 20, wherein the first frequency domain unit is the first RB, and a second RE in the first RB is used to determine a beam index of the first transmission beam.

22. The method according to claim 21, wherein that the second RE in the first RB is used to determine the beam index of the first transmission beam comprises:
a frequency domain position of the second RE in the first RB is used to determine the beam index of the first transmission beam.

23. The method according to any one of claims 14 to 22, wherein the first signal is a reference signal or a reference sequence.

24. The method according to claim 14, wherein the first signal is a reference sequence, and that the frequency domain resource of the first resource is used to determine the identifier of the first terminal apparatus comprises:
the frequency domain resource of the first resource and a code domain resource of the first resource are used to determine the identifier of the first terminal apparatus.

25. The method according to claim 14, wherein the first signal is a reference sequence, and a code domain resource of the first resource is used to determine a beam index of the first transmission beam.

26. The method according to any one of claims 16 to 25, wherein the second resource set corresponding to the second symbol further comprises a third resource, a frequency domain resource of the third resource is different from the frequency domain resource of the second resource, the third resource is used by a third terminal apparatus to send a second signal, the second signal is different from the first signal, and a frequency domain unit of the third resource is used to determine an identifier of the third terminal apparatus.

27. A communication apparatus, comprising a module configured to perform the method according to any one of claims 1 to 13, or a module configured to perform the method according to any one of claims 14 to 26.

28. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 13 through a logic circuit or by executing code instructions, or the processor is configured to implement the method according to any one of claims 14 to 26 through a logic circuit or by executing code instructions.

29. A computer-readable storage medium, wherein the storage medium stores a computer program or instructions, and when the computer program or the instructions are executed by a communication apparatus, the method according to any one of claims 1 to 13 is implemented, or the method according to any one of claims 14 to 26 is implemented.
